# EUROPÄISCHE PATENTSCHRIFT

(11) **EP 1 490 609 B1**
(45) Veröffentlichungstag und Bekanntmachung des Hinweises auf die Patenterteilung: **10.05.2006**
(21) Anmeldenummer: 03708250.0
(22) Anmeldetag: 18.03.2003
(51) Int. Cl.: F16H 25/22

(54) **KUGELGEWINDETRIEB MIT UMLENKSTÜCK**
BALL SCREW PROVIDED WITH A DEFLECTION ELEMENT
VIS D'ENTRAINEMENT A BILLES POURVUE D'UNE PIECE DE RENVOI

(30) Priorität: 30.03.2002 DE 10214481
(43) Veröffentlichungstag der Anmeldung: 29.12.2004
(73) Patentinhaber: Schaeffler KG, 91074 Herzogenaurach (DE)
(72) Erfinder: OSTERLÄNGER, Jürgen, 91448 Emskirchen (DE); MAYER, Ralf, 91074 Herzogenaurach (DE)
(86) Internationale Anmeldenummer: PCT/EP2003/002787
(87) Internationale Veröffentlichungsnummer: WO 2003/083328

(56) Entgegenhaltungen:
- DE-A- 19 944 875
- US-A- 3 306 124
- US-A1- 2001 025 540

## Beschreibung

Die vorliegende Erfindung betrifft einen Kugelgewindetrieb, mit einer Spindel und einer diese umgebenden Mutter, sowie mit Kugeln, die in einer Gewindebahn abrollbar angeordnet sind. Derartige Kugelgewindetriebe sind weitverbreitet und kommen beispielsweise in Werkzeugmaschinen, aber in jüngerer Zeit auch im Kfz-Bereich, insbesondere bei sogenannten Steer-by-wire-Anwendungen, zum Einsatz.

Aus DE 199 44 875 A1 beispielsweise ist ein Kugelgewindetrieb mit einer Spindel und eine diese umgebende Mutter sowie mit dazwischen angeordneten Kugeln bekannt geworden, wobei die Kugeln in einer an der äußeren Oberfläche der Spindel ausgebildeten Gewindenut und in einer entsprechenden an der inneren Oberfläche der Mutter ausgebildeten Gewindenut abrollbar angeordnet sind. Die Mutter ist ferner mit radialen Durchgangsöffnungen versehen, in welche Umlenkstücke für die Rückführung der Kugeln jeweils von einem Auslaufende einer gemeinsamen Windung der Gewindenuten zu einem Einlaufende dieser Windung eingesetzt sind. Das Umlenkstück weist zur Bildung eines Umlenkkanals einen Boden und zwei Seitenschenkel mit freien Enden auf. Die freien Enden tauchen in die Gewindenut der Spindel ein und hindern die Kugeln daran weiterhin entlang der Gewindebahn abzuwälzen. Vielmehr werden sie durch die Seitenschenkel in Richtung auf die Flanke des Gewindesteges der Spindel gelenkt und durch nachfolgende Kugeln gedrückt, wobei die Kugeln an der Flanke des Gewindesteges angehoben und schließlich entlang des Umlenkkanals zu dem Einlaufende bzw. zu dem Auslaufende hin verlagert werden. Wenn die Kugeln ihre Gewindebahn verlassen, werden sie demzufolge einerseits an dem Umlenkstück und andererseits an dem Gewindesteg entlang bewegt. Gerade das Anheben der Kugeln an dem Gewindesteg kann jedoch zum Hakeln führen, so dass der Umlenkvorgang insgesamt beeinträchtigt ist.

Aus der gattungsgemäßen US 3306124 ist ein Kugelgewindetrieb bekannt geworden, bei dem ebenso wie bei der Erfindung Umlenkstücke für eine Einzelumlenkung vorgesehen sind. Während des Heraushebens der Kugeln aus der Gewindebahn besteht das Risiko, dass die Kugeln an die Gewindeflanken oder an die Spitzen der Gewindestege anschlagen, so dass unerwünschte Geräusche entstehen können, wobei ferner der Umlauf der Kugeln hakelig werden kann.

Aufgabe der Erfindung ist es, einen Wälzkörpergewindetrieb nach den Merkmalen des Oberbegriffs des Anspruchs 1 anzugeben, bei dem die Umlenkung der Kugeln verbessert ist.

Erfindungsgemäß wird diese Aufgabe dadurch gelöst, dass der lichte Abstand zwischen den beiden freien Enden der Seitenschenkel kleiner als der Kugeldurchmesser ausgeführt ist. Dadurch ist sichergestellt, dass während des gesamten Umlenkvorgangs die Kugeln einwandfrei im Umlenkkanal geführt werden. Bei dieser erfindungsgemäßen Weiterbildung erweitert sich der Abstand zwischen den Seitenschenkeln, wenn man von deren freien Enden hinab in Richtung auf den Boden des Umlenkstücks Schnittführungen parallel zum Boden des Umlenkstücks annimmt. Im Querschnitt gesehen kann das Umlenkstück beispielsweise etwa einen Dreiviertelkreis umschreiben, jedenfalls mehr als einen halben Kreisumfang. Bei dem bekannten Umlenkstück hingegen sind die beiden Seitenschenkel zusammen mit dem Boden etwa u-förmig angeordnet, jedenfalls so, dass die Kugeln - von der Seite der freien Enden kommend - zwischen den beiden Seitenschenkeln eingeführt bzw. herausgenommen werden können.

Bei dem erfindungsgemäßen Kugelgewindetrieb sind beide Seitenschenkel des Umlenkstücks an umfangsseitig entgegengesetzten Enden jeweils an ihrem der Gewindenut der Spindel zugewandten freien Ende mit einer Schaufel zum Eingriff zwischen die Kugel und die Gewindenut der Gewindespindel versehen. Während bei dem aus DE 199 44 875 A1 bekannten Umlenkstück das Anheben der Kugel entlang der Flanke des Gewindesteges erfolgt, werden die Kugeln bei dem erfindungsgemäßen Gewindetrieb von der Schaufel angehoben. Die Formgebung der Schaufel kann vorzugsweise dergestalt sein, dass diese nahezu tangential an den Grund der Gewindenut der Spindel heranreicht. Somit ist ein sanftes Abheben der Kugel von der Gewindebahn der Spindel gewährleistet. Ein Anheben der Kugel an der Flanke des Gewindestegs kann somit entfallen.

Vorzugsweise ist die Schaufel geneigt zu einer Tangente angeordnet, die an die Gewindenut der Spindel im Übergabebereich der Kugel von der Gewindenut der Spindel zu der Schaufel angelegt ist. Diese Neigung der Schaufel bewirkt, dass die Kugel vom Grund der Gewindenut der Spindel abgehoben wird. Zusätzlich kann die Schaufel eine weitere Neigung aufweisen, die gedanklich die Gewindebahn schneidet, so dass die Kugel schon in Richtung auf das Auslaufende der gemeinsamen Windung umgelenkt wird.

Die Seitenschenkel und die Schaufeln des Umlenkstückes bilden vorzugsweise Leitkanten oder Leitflächen für die Kugeln, um die Kugel auf eine bezogen auf die Nutgrund der Gewindenut der Spindel höheres Niveau zu heben. Die Kugel wird soweit angehoben, bis sie einwandfrei über den Gewindesteg der gemeinsamen Windung überführt werden kann. Bei einem erfindungsgemäßen Umlenkstück können Leitkanten an beiden Seitenschenkeln hinreichend sein, um die Kugel einwandfrei umzulenken. Durch den Linienkontakt wird die Reibung der Kugeln mit dem Umlenkstück auf ein Minimum reduziert.

Sowohl bei bekannten als auch bei dem erfindungsgemäßen Umlenkstück sind zwischen dem Einlaufende und dem Auslaufende Bereiche unterschiedlicher Krümmung vorgesehen. Die Bereiche unterschiedlicher Krümmung sind erforderlich, um die Kugeln von dem Auslaufende der gemeinsamen Windung hin zu dem Einlaufende dieser Windung über den gemeinsamen Gewindesteg zu verlagern. Bei dem erfindungsgemäßen Umlenkstück gehen diese Bereiche unterschiedlicher Krümmung kantenfrei ineinander über. Das bedeutet, dass ein sanftes Umlenken der Kugeln gewährleistet ist.

Kantenfreie Übergänge lassen sich insbesondere bei erfindungsgemäßen Umlenkstücken realisieren, die aus thermoplastischen Kunststoff im Spritzgießverfahren hergestellt sind, wobei die beiden Seitenschenkel für eine Zwangsentformung nach Erstarren der Kunststoffmasse elastisch aufspreizbar ausgebildet sind. Aufgrund der geometrisch komplizierten Ausbildung des Umlenkkanals ist ein Entformen in Umfangsrichtung - dass heißt etwa in Richtung des Verlaufs der Gewindebahn nur schwer und aufwendig zu realisieren. Wenn jedoch die Seitenschenkel für eine Zwangsentformung nach Erstarren der Kunststoffmasse elastisch aufspreizbar ausgebildet sind, kann ein Schieberwerkzeug zum Einsatz kommen, dass in einem Guß den vollständigen Umlenkkanal formen kann. Wenn das Schieberwerkzeug nach dem Erstarren der Kunststoffmasse etwa senkrecht zum Boden des Umlenkstückes aus dem Umlenkstück herausgezogen wird, geben die Seitenschenkel elastisch nach und nehmen nach dem Entfernen des Schieberwerkzeugs wieder ihre vorgesehene Position ein. Derart gebildete Umlenkstücke lassen sich in wirtschaftlich günstiger Weise in großen Stückzahlen herstellen. Insbesondere eine kantenfreie Gestaltung der Bereiche unterschiedlicher Krümmung lassen sich mit diesem Herstellverfahren in besonders günstiger Weise verwirklichen.

Da oftmals der Bauraum für Kugelgewindetriebe begrenzt ist, sieht eine erfindungsgemäße Weiterbildung vor, dass das Umlenkstück an seiner der Spindel zugewandten Seite an die Kontur der Spindel angepasst ist. Das bedeutet, dass an dieser Seite eine in Umfangsrichtung ausgebildete Krümmung vorgesehen ist, die sowohl der Formgebung der Gewindenut als auch des Gewindestegs Rechnung trägt. Der Abstand zwischen dem Umlenkstück und der Spindel ist dabei möglichst klein gehalten, wodurch ein besonders hakelfreies Abheben der Kugeln von der Gewindenut der Spindel unterstützt wird.

Das Umlenkstück ist vorzugsweise an beiden umfangsseitigen Enden mit Zentrierstegen versehen, um die Kugeln für den Eintritt in das Umlenkstück auszurichten. Derartige Zentrierstege unterstützen ebenfalls ein hakelfreies Arbeiten des Kugelgewindetriebs. Während die Kugeln in der Gewindebahn von der Gewindenut der Spindel und der Gewindenut der Mutter einwandfrei geführt sind, fällt die Führung durch die Gewindenut der Mutter weg, wenn die Kugeln die Gewindebahn verlassen und in den Bereich des Umlenkstücks gelangen.

Der Wegfall dieser Führung wird zumindest teilweise kompensiert durch die erfindungsgemäß angeordneten Zentrierstege.

Vorzugsweise sind beide Seitenschenkel an beiden umfangsseitigen Enden jeweils mit einem einstückig angeformten Zentriersteg versehen. Die Zentrierstege sind dabei jeweils auf dem Gewindesteg der Spindel angeordnet, so dass die Abrollbahn der Kugeln seitlich bestimmt ist.

Wenn die Umlenkstücke in ihren an der Mutter ausgebildeten Ausnehmungen angeordnet sind, können diese gegen Herausfallen aus der Ausnehmung durch eine Verliersicherung gesichert sein. Eine besonders günstige erfindungsgemäße Weiterbildung sieht vor, dass an dem Umlenkstück vorgesehene, vorzugsweise einstückig angeformte Vorsprünge ausgebildet sind, die an der Innenwandung der Mutter abstützbar sind. Diese erfindungsgemäße Weiterbildung eignet sich insbesondere für die Montage der Umlenkstücke von innen - also von der Seite der Gewindebohrung her. Wenn die Umlenkstücke von innen eingesetzt werden, können sie nicht durch die Ausnehmung durchgedrückt werden, denn die Vorsprünge schlagen dann an der Innenwandung der Mutter an. Im Betrieb des Kugelgewindetriebs ist somit sichergestellt, dass die Umlenkstücke einwandfrei in ihren Ausnehmungen gehalten sind. In einer besonders einfachen und günstigen erfindungsgemäßen Weiterbildung übernehmen die weiter oben bereits erwähnten Zentrierstege die Aufgaben der Verliersicherung. In diesem Fall sind die Vorsprünge durch die Zentrierstege gebildet.

Nachstehend wird die Erfindung anhand eines in insgesamt sieben Figuren dargestellten Ausführungsbeispieles näher erläutert. Es zeigen:
- Figur 1: einen erfindungsgemäßen Kugelgewindetrieb in perspektivischer Darstellung,
- Figur 2: den Kugelgewindetrieb aus Figur 1 aus anderer Perspektive,
- Figur 3: eine Seitenansicht eines erfindungsgemäßen Umlenkstückes wie in Figur 1 mit Hervorhebung der Kugelumlaufbahn,
- Figur 4: eine perspektivische Darstellung des erfindungsgemäßen Umlenstückes,
- Figur 5: einen Schnitt durch das Umlenkstück aus Figur 4 entlang der Linie V-V,
- Figur 6: eine weitere perspektivische Darstellung des erfindungsgemäßen Umlenkstückes aus Figur 4 im Schnitt und
- Figur 7: eine weitere perspektivische Darstellung des erfindungsgemäßen Umlenkstückes.

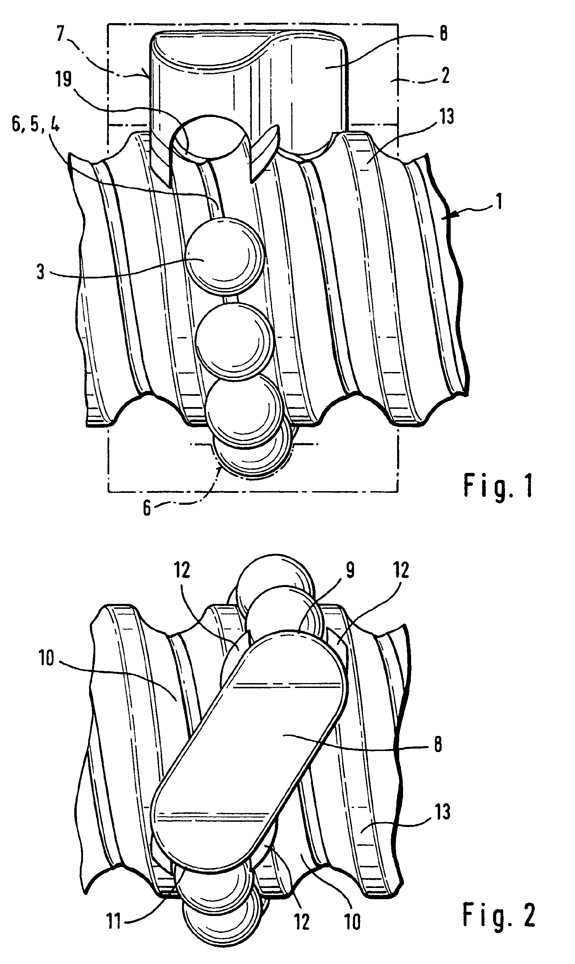

Figur 1 zeigt in perspektivischer Darstellung einen erfindungsgemäßen Kugelgewindetrieb, mit einer Spindel 1 und einer hier nur andeutungsweise abgebildeten Mutter 2, die die Spindel 1 umgibt. Kugeln 3 sind abrollbar in einer Gewindebahn 4 angeordnet, wobei die Gewindebahn 4 gebildet ist durch eine Gewindenut 5 der Spindel 1 und eine Gewindenut 6 der Mutter 2. Ferner weist die Mutter 2 mehrere über den Umfang verteilt angeordnete Ausnehmungen 7 auf, in denen jeweils ein Umlenkstück 8 für die Rückführung der Kugeln 3 jeweils von einem Auslaufende 9 einer gemeinsamen Windung 10 der Gewindebahn 4 hin zu einem Einlaufende 11 dieser gemeinsamen Windung 10 angeordnet ist.

An den umfangsseitigen Enden sind an dem Umlenkstück 8 jeweils zwei Zentrierstege 12 ausgebildet, die über dem Gewindesteg 13 der Spindel 1 angeordnet sind. Diese Zentrierstege 12 sind einstückig an das Umlenkstück 8 angeformt und unterstützen das Einfädeln der Kugeln 3 in das Umlenkstück 8, wenn diese von der Gewindebahn 4 hinein in das Umlenkstück 8 rollen.

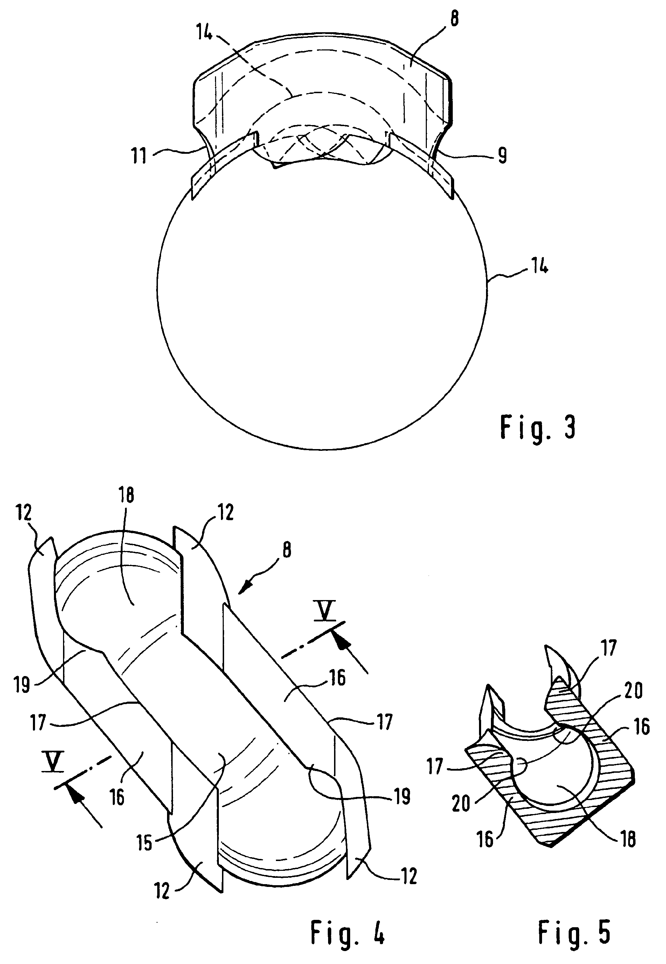

Figur 3 zeigt den Verlauf der Kugel entlang der gemeinsamen Windung 10, wobei hier lediglich die Kugelmitte für die Kugelbahn 14 angedeutet ist. Der Figur ist zu entnehmen, dass etwa in der Mitte des Umlenkstücks die hier nicht dargestellten Kugeln soweit angehoben sind, dass sie über den hier ebenfalls nicht dargestellten Gewindesteg 13 der Spindel 1 hinüber gehoben werden können.

Figur 4 zeigt in perspektivischer Darstellung das erfindungsgemäße Umlenkstück 8. Das Umlenkstück 8 umfasst einen Boden 15 und zwei Seitenschenkel 16; die freien Enden 17 der beiden Seitenschenkel 16 sind der hier nicht abgebildeten Spindel 1 zugewandt. Die an den umfangsseitigen Enden des Umlenkstücks 8 vorgesehenen Zentrierstege 12 sind ebenfalls deutlich zu erkennen. Im Inneren des Umlenkstücks 8 ist ein Umlenkkanal 18 ausgebildet, um die Kugeln 3 jeweils von einem Auslaufende der gemeinsamen Windung 10 zu dem Einlaufende 11 der gemeinsamen Windung 10 rückzuführen. Bereits der Figur 4 ist zu entnehmen, dass an den umfangsseitigen Enden der beiden Seitenschenkel 16 Schaufeln 19 vorgesehen sind, die zwischen die Kugeln 3 und die Gewindenut 5 der Spindel 12 eingreifen. In Figur 1 ist ein Teil einer der Schaufeln 19 zu erkennen.

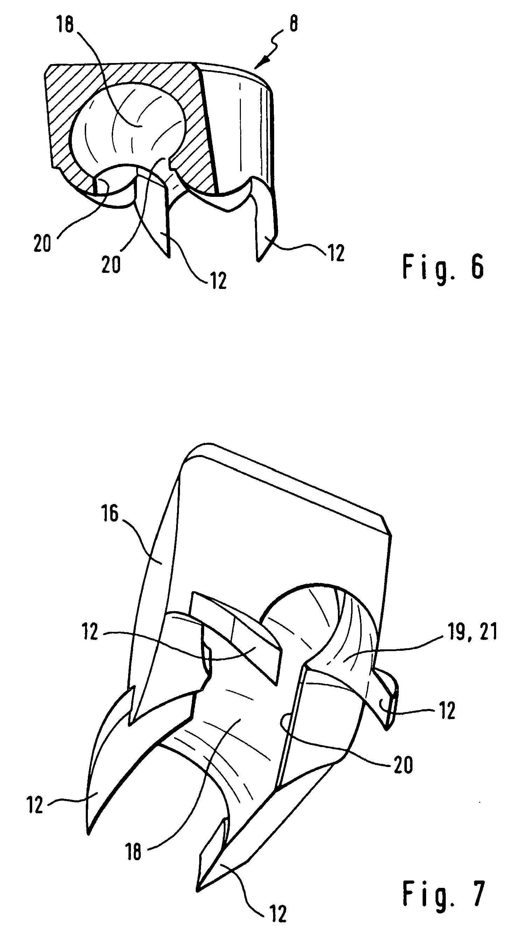

Figur 5 zeigt einen Querschnitt durch das Umlenkstück 8 entlang der Linie V-V aus Figur 4. Dieser Figur ist deutlich zu entnehmen, dass der lichte Abstand zwischen den beiden freien Enden 17 der beiden Seitenschenkel 16 kleiner ist als der Kugeldurchmesser. Die Querschnittsöffnung des Umlenkkanals 18 verjüngt sich an dem freien Ende 17 der beiden Seitenschenkel 16, wobei an beiden Seitenschenkeln 16 jeweils eine Leitkante 20 gebildet ist, an der die Kugeln 3 entlang geführt werden. Figur 6 zeigt das Umlenkstück 8 im gleichen Schnitt wie in Figur 5, jedoch aus einer anderen Perspektive, so dass insbesondere die einstückig angeformten Zentrierstege 12 gut zu erkennen sind.

Figur 7 zeigt in perspektivischer Darstellung das Umlenkstück 8. In dieser Darstellung ist die Schaufel 19 besonders gut zu erkennen. Die Schaufel 19 bildet zugleich eine Leitfläche 21 an der die Kugeln 3 auf ihrem Weg durch den Umlenkkanal 18 geführt werden. In dieser Figur ist ebenfalls die Leitkante 20 des einen Seitenschenkels 16 deutlich zu entnehmen.

Bei dem erfindungsgemäßen Kugelgewindetrieb ist zum Umlenken der Kugeln 3 ein Kontakt zwischen der Kugel 3 und der Flanke des Gewindestegs 13 nicht zwingend erforderlich. In günstiger Weise kann der Umlenkvorgang ohne Kontakt der Kugel 3 mit dem Gewindesteg 13 durchgeführt werden. Allerdings ist es je nach Ausführungsform des erfindungsgemäßen Umlenkstücks denkbar, dass dennoch ein Kontakt zwischen der Kugel 3 und dem Gewindesteg 13 bzw. dessen Flanke möglich ist.

Im Wesentlichen erfolgt jedoch die Umlenkung und die Führung der Kugeln und das Anheben auf eine höheres Niveau durch die Schaufeln bzw. die Leitflächen und die Leitkanten. Die Berührungsverhältnisse der Kugel mit anderen Bauteilen ist auch davon abhängig, mit welcher Geschwindigkeit die Kugeln durch den Umlenkkanal hindurch geführt werden. Denn abhängig von der Geschwindigkeit beeinflussen Gravitations- und Fliehkräfte den Weg und damit die Kontaktpunkte der Kugeln.

Bei dem hier beschriebenen Kugelgewindetrieb ist eine Verliersicherung vorgesehen, die die Umlenkstücke 8 gegen herausfallen aus den Ausnehmungen 7 der Mutter 2 sichern. Diese Verliersicherung ist hier durch die Zentrierstege 12 gebildet. Figur 2 zeigt, dass die Zentrierstege 12 das Umlenkstück 8 in der gezeigten Draufsicht überragen. Dass bedeutet, dass die Umlenkstücke, wenn sie von innen in ihre vorgesehenen Ausnehmungen 7 der Mutter 2 eingefügt werden nicht herausfallen können. Denn die Zentrierstege 12 kommen zur Anlage an die innere Wandung der Mutter 2, so dass die Umlenkstücke 8 einwandfrei in ihren Ausnehmungen 7 aufgenommen und gehalten sind.

### Positionszahlenliste

- 1: Spindel
- 2: Mutter
- 3: Kugel
- 4: Gewindebahn
- 5: Gewindenut
- 6: Gewindenut
- 7: Ausnehmung
- 8: Umlenkstück
- 9: Auslaufende
- 10: gemeinsam Windung
- 11: Einlaufende
- 12: Zentriersteg
- 13: Gewindesteg
- 14: Kugelbahn
- 15: Boden
- 16: Seitenschenkel
- 17: freies Ende
- 18: Umlenkkanal
- 19: Schaufel
- 20: Leitkante
- 21: Leitfläche

## Patentansprüche

1. Kugelgewindetrieb, mit einer Spindel (1) und einer diese umgebenden Mutter (2), sowie mit Kugeln (3), die in einer Gewindebahn (4) abrollbar angeordnet sind, wobei die Gewindebahn (4) durch eine an der Spindel (1) ausgebildeten Gewindenut (5) und eine an der Mutter (2) ausgebildeten Gewindenut (6) gebildet ist, und mit wenigstens einem in einer Ausnehmung (7) der Mutter (2) angeordneten Umlenkstück (8) für die Rückführung der Kugeln (3) jeweils von einem Auslaufende (8) einer gemeinsamen Windung (10) der Gewindebahn (4) zu einem Einlaufende (11) dieser Windung (10), wobei das Umlenkstück (8) zur Bildung eines Umlenkkanals (18) einen Boden (15) und zwei Seitenschenkel (16) mit freien Enden (17) umfaßt, wobei beide Seitenschenkel (16) an umfangsseitig entgegengesetzten Enden jeweils an ihrem der Gewindenut (5) der Spindel (1) zugewandten freien Ende (17) mit einer Schaufel (19) zum Eingriff zwischen die Kugel (3) und die Gewindenut (5) der Gewindespindel (1) versehen sind, **dadurch gekennzeichnet, dass** ein lichter Abstand zwischen den beiden freien Enden (17) der Seitenschenkel (16) kleiner als der Kugeldurchmesser ausgeführt ist.

2. Kugelgewindetrieb nach Anspruch 1, bei dem die Schaufel (19) geneigt zu einer Tangente ist, die an die Gewindenut (5) der Spindel (1) im Übergabebereich der Kugel (3) von der Gewindenut (5) der Spindel (1) zu der Schaufel (19) angelegt ist.

3. Kugelgewindetrieb nach Anspruch 1, bei dem die Seitenschenkel (16) und die Schaufeln (19) Leitkanten (20) und/oder Leitflächen (21) für die Kugel (3) bilden, um die Kugel (3) auf ein bezogen auf den Nutgrund (6) der Gewindenut (5) der Spindel (1) höheres Niveau zu heben.

4. Kugelgewindetrieb nach Anspruch 3, bei dem der Umlenkkanal (18) zwischen dem Einlaufende (11) und dem Auslaufende (9) Bereiche unterschiedlicher Krümmung aufweist, die kantenfrei ineinander übergehen.

5. Kugelgewindetrieb nach Anspruch 1, bei dem das Umlenkstück (18) aus insbesondere thermoplastischen Kunststoff im Spritzgießverfahren hergestellt ist, wobei die beiden Seitenschenkel (16) für eine Zwangsentformung nach Erstarren der Kunststoffmasse elastisch aufspreizbar ausgebildet sind.

6. Kugelgewindetrieb nach Anspruch 5, bei dem der lichte Abstand zwischen den beiden Seitenschenkeln (16) an ein zwischen die beiden Seitenschenkel (16) eingreifbares Schieberwerkzeug abgestimmt ist.

7. Kugelgewindetrieb nach Anspruch 1, bei dem das Umlenkstück (18) an seiner der Spindel (1) zugewandten Seite an die Kontur der Spindel (1) angepaßt ist.

8. Kugelgewindetrieb nach Anspruch 1, bei dem das Umlenkstück (18) an beiden umfangsseitigen Enden mit Zentrierstegen (12) versehen ist, um die Kugeln (3) für den Eintritt in das Umlenkstück (18) auszurichten.

9. Kugelgewindetrieb nach Anspruch 9, bei dem beide Seitenschenkel (16) an beiden umfangsseitigen Enden jeweils mit einem einstückig angeformten Zentriersteg (12) versehen sind.

10. Kugelgewindetrieb nach Anspruch 9, bei dem die Zentrierstege (12) eine Verliersicherung für das Umlenkstück (8) bilden, wobei das Umlenkstück (8) von innen in eine vorgesehene Ausnehmung (7) der Mutter (2) eingesetzt wird.

## Claims

1. Ball screw drive, having a spindle (1) and a nut (2) which surrounds the latter, and having balls (3) which are arranged such that they can roll in a thread path (4), the thread path (4) being formed by a thread groove (5) which is made on the spindle (1) and by a thread groove (6) which is made on the nut (2), and having at least one deflection piece (8) which is arranged in a recess (7) of the nut (2) for the return of the balls (3) in each case from an outlet end (9) of a common thread (10) of the thread path (4) to an inlet end (11) of the said thread (10), the deflection piece (8) comprising a base (15) and two side legs (16) with free ends (17) for forming a deflection channel (18), both side legs (16) being provided on circumferentially opposite ends, in each case at their free end (17) which faces the thread groove (5) of the spindle (1), with a blade (19) for engaging between the ball (3) and the thread groove (5) of the threaded spindle (1), **characterized in that** a clear spacing between the two free ends (17) of the side legs (16) is smaller than the ball diameter.

2. Ball screw drive according to Claim 1, in which the blade (19) is inclined with respect to a tangent which touches the thread groove (5) of the spindle (1) in the transfer region of the ball (3) from the thread groove (5) of the spindle (1) to the blade (19).

3. Ball screw drive according to Claim 1, in which the side legs (16) and the blades (19) form guiding edges (20) and/or guiding surfaces (21) for the ball (3), in order to lift the ball (3) to a level which is higher than the groove bottom (6) of the thread groove (5) of the spindle (1).

4. Ball screw drive according to Claim 3, in which the deflection channel (18) has regions of different curvature which merge without edges into one another, between the inlet end (11) and the outlet end (9).

5. Ball screw drive according to Claim 1, in which the deflection piece (8) is manufactured in the injection moulding process from, in particular, thermoplastic, the two side legs (16) being configured such that they can be spread open elastically for forcible demoulding after the plastic mass has solidified.

6. Ball screw drive according to Claim 5, in which the clear spacing between the two side legs (16) is adapted to a slider tool which can engage between the two side legs (16).

7. Ball screw drive according to Claim 1, in which the deflection piece (8) is adapted to the contour of the spindle (1) on its side which faces the spindle (1).

8. Ball screw drive according to Claim 1, in which the deflection piece (8) is provided with centring webs (12) at both circumferential ends, in order to align the balls (3) for entry into the deflection piece (8).

9. Ball screw drive according to Claim 9, in which both side legs (16) are provided at both circumferential ends in each case with a centring web (12) which is integrally moulded on in one piece.

10. Ball screw drive according to Claim 9, in which the centring webs (12) form a captive securing means for the deflection piece (8), the deflection piece (8) being introduced from inside into a provided recess (7) of the nut (2).

## Revendications

1. Vis d'entraînement à billes comportant un arbre (1) et un écrou (2) entourant celui-ci, ainsi que des billes (3) disposées de manière à pouvoir rouler dans un chemin de roulement (4) du filet, le chemin de roulement (4) du filet étant formé par une gorge filetée (5) conformée sur l'arbre (1) et une gorge taraudée (6) conformée sur l'écrou (2), et au moins une pièce de renvoi (8) disposée dans un évidement (7) de l'écrou (2), destinée à renvoyer les billes (3) chaque fois depuis une extrémité de sortie (9) d'une spire commune (10) du chemin de roulement (4) du filet vers une extrémité d'entrée (11) de ladite spire (10), la pièce de renvoi (8) comportant un fond (15) et deux flancs (16) avec des extrémités libres (17) de manière à former un canal de renvoi (18), les deux flancs (16) étant pourvus aux extrémités opposées au côté circonférentiel, chaque fois à leur extrémité libre (17) tournée vers la gorge filetée (5) de l'arbre (1), d'une aube (19) destinée à s'engrener entre la bille (3) et la gorge filetée (5) de l'arbre fileté (1), **caractérisée en ce qu'**un écartement entre les deux extrémités libres (17) des flancs (16) est prévu plus petit que le diamètre des billes.

2. Vis d'entraînement à billes selon la revendication 1, l'aube (19) étant inclinée par rapport à une tangente appliquée contre la gorge filetée (5) de l'arbre (1), dans la zone de transfert de la bille (3) depuis la gorge filetée (5) de l'arbre (1) vers l'aube (19).

3. Vis d'entraînement à billes selon la revendication 1, les flancs (16) et les aubes (19) formant des bords de guidage (20) et/ou des surfaces de guidage (21) de la bille (3), afin de soulever la bille (3) à un niveau plus élevé par rapport au fond de gorge (6) de la gorge filetée (5) de l'arbre (1).

4. Vis d'entraînement à billes selon la revendication 3, le canal de renvoi (18) présentant une courbure différente entre les zones de l'extrémité d'entrée (11) et de l'extrémité de sortie (9), lesquelles se confondent sans aucun bord.

5. Vis d'entraînement à billes selon la revendication 1, la pièce de renvoi (8) étant fabriquée en particulier en matière synthétique thermoplastique par un procédé de moulage par injection, les deux flancs (16) étant conformés de façon à s'écarter élastiquement en vue d'un démoulage forcé après solidification de la masse de matière synthétique.

6. Vis d'entraînement à billes selon la revendication 5, l'écartement entre les deux flancs (16) étant adapté à un moule à empreintes mobiles pouvant s'engrener entre les deux flancs (16).

7. Vis d'entraînement à billes selon la revendication 1, la pièce de renvoi (8) étant adaptée au contour de l'arbre (1) de son côté tourné vers l'arbre (1).

8. Vis d'entraînement à billes selon la revendication 1, la pièce de renvoi (8) étant pourvue aux deux extrémités du côté circonférentiel d'ailettes de centrage (12) afin d'orienter les billes (3) en vue de leur entrée dans la pièce de renvoi (8).

9. Vis d'entraînement à billes selon la revendication 9, les deux flancs (16) étant chacun pourvus aux deux extrémités du côté circonférentiel d'une ailette de centrage (12) formée d'une seule pièce.

10. Vis d'entraînement à billes selon la revendication 9, les ailettes de centrage (12) formant une sécurité contre la perte de la pièce de renvoi (8), la pièce de renvoi (8) étant insérée par l'intérieur de l'écrou (2) dans un évidement (7) prévu.
